# EUROPÄISCHE PATENTSCHRIFT

(11) **EP 2 216 197 B1**
(45) Veröffentlichungstag und Bekanntmachung des Hinweises auf die Patenterteilung: **16.12.2015**
(21) Anmeldenummer: 10001318.4
(22) Anmeldetag: 09.02.2010
(51) Int. Cl.: B60K 31/00, B62D 15/02, B60W 30/12, B60W 50/08, B60W 30/14, B60W 30/18

(54) **Verfahren zur Steuerung eines Fahrerassistenzsystems und Fahrerassistenzsystem**
Method for controlling a driver assist system and driver assist system
Procédé de commande d'un système d'assistance du conducteur et système d'assistance du conducteur

(30) Priorität: 09.02.2009 DE 102009008142
(43) Veröffentlichungstag der Anmeldung: 11.08.2010
(73) Patentinhaber: Technische Universität Darmstadt, 64289 Darmstadt (DE)
(72) Erfinder: Winner, Hermann, 76467 Bietigheim (DE); Hakuli, Stephan, 64285 Darmstadt (DE); Geyer, Sebastian, 64283 Darmstadt (DE)
(74) Vertreter: Katscher Habermann Patentanwälte

(56) Entgegenhaltungen:
- EP-A1- 1 607 264
- EP-A2- 1 598 233
- EP-A2- 2 042 399
- DE-A1- 10 114 187
- DE-A1- 19 610 700
- DE-A1-102007 022 526
- US-A1- 2006 095 193

## Beschreibung

Die Erfindung betrifft ein Verfahren zur Steuerung eines Fahrerassistenzsystems. In der Vergangenheit sind verschiedene Fahrerassistenzsysteme entwickelt worden, deren primäres Ziel die Erhöhung des Komforts und die Entlastung der Konzentration des Fahrers insbesondere auf längeren Autobahnfahrten mit zuverlässig erfassbaren und üblicherweise einfachen Verkehrssituationen ist.

Einige Fahrerassistenzsysteme können beispielsweise eine vorgebbare Fahrgeschwindigkeit einregeln und beibehalten (Tempomat), bis das Fahrerassistenzsystem durch einen manuellen Eingriff wieder deaktiviert wird.

In Erweiterung derartiger Fahrgeschwindigkeitsregelungen wurden adaptive Geschwindigkeits- und Abstandsregelungen (ACC) zu vorausfahrenden Fahrzeugen entwickelt und zur Serienreife gebracht. Mittels geeigneter Sensoren wird dabei ein Abstand zu einem vorausfahrenden Fahrzeug ermittelt und die Fahrgeschwindigkeit des eigenen Kraftfahrzeugs an eine vorgebbare Wunschgeschwindigkeit und an einen ebenfalls vorgebbaren räumlichen Abstand bzw. einen entsprechenden zeitlichen Abstand zu dem vorausfahrenden Fahrzeug angepasst.

Der Nachteil der aus der Praxis bekannten adaptiven Abstandsregelsysteme wird darin gesehen, dass derzeit im Wesentlichen nur eine Abstandsregelung zu einem in dem selben Fahrstreifen vorausfahrenden Fahrzeug zuverlässig umgesetzt werden kann, während bei jeglichen Abweichungen der innerhalb enger Parameter vorgegebenen Verkehrssituationen ein Eingreifen des Fahrers und oftmals eine Deaktivierung des Fahrerassistenzsystems erforderlich wird. Dies führt in der Praxis dazu, dass mit Ausnahme von eintönigen Fahrsituationen eine ständige Überprüfung durch den Fahrer und in vielen Situationen dessen Eingreifen notwendig wird, was üblicherweise mit einer sofortigen Deaktivierung des Fahrerassistenzsystems und einer im Anschluss daran erneuten Aktivierung des Systems verbunden ist. Nach einer erneuten Aktivierung des Fahrerassistenzsystems wird dann zwar wieder die ursprünglich vorgegebene Wunschgeschwindigkeit und der Wunschabstand eingeregelt, was jedoch regelmäßig einen erheblichen Anpassungsaufwand der eigenen Fahrgeschwindigkeit notwendig werden lässt, wobei die ständigen Geschwindigkeitsänderungen während des neuen Einregelns der Geschwindigkeit oftmals nachteilig empfundenen werden und den Komfort beeinträchtigen.

Es wurden verschiedene Ansätze entwickelt, um die von dem jeweiligen Fahrerassistenzsystem erfassbaren und erkennbaren Fahrsituationen zu erweitern und dem Fahrer die Möglichkeit zu geben, in bestimmten Fahrsituationen korrigierend einzugreifen, ohne das Fahrerassistenzsystem deaktivieren und anschließend wieder aktivieren zu müssen. Dabei wird davon ausgegangen, dass eine harmonischere Fahrweise und eine bessere Akzeptanz der bekannten Fahrerassistenzsysteme maßgeblich davon abhängen, ob die bekannten Fahrerassistenzsysteme zukünftig auch komplexe Fahrsituationen erkennen und sinnvolle Fahrmanöver automatisiert durchführen können, so dass manuelle Eingriffe des Fahrers verbunden mit einer Deaktivierung des Fahrerassistenzsystems möglichst selten erforderlich werden.

Aus US 2008/0195292 A1 ist beispielsweise eine Weiterentwicklung der vorangehend beschriebenen ACC-Systeme bekannt, bei der dem Fahrer mittels eines zusätzlichen Bedienelements eine Beeinflussung der Längsbeschleunigung ermöglicht wird. So ist es dem Fahrer möglich, beispielsweise bei Einschersituationen, in denen ein fremdes Fahrzeug auf den eigenen Fahrstreifen einschert, oder bei Überholvorgängen die eigene Längsbeschleunigung und den ursprünglich vorgegebenen Wunschabstand zu dem vorausfahrenden bzw. einscherenden Fahrzeug kurzzeitig oder dauerhaft zu beeinflussen.

Aus EP 0605104 A1 ist es beispielsweise bekannt, dass der Fahrer die von dem Fahrerassistenzsystem automatisiert durchgeführte Zielauswahl eines vorausfahrenden Fahrzeugs überstimmen bzw. ein alternatives Zielobjekt angeboten bekommt und auswählen kann.

Beispielsweise in EP 1 598 233 A2, in EP 1 607 264 A1 oder in EP 2 042 399 A2 werden Fahrerassistenzsysteme beschrieben, die nach deren Aktivierung einen Spurwechsel unterstützen oder durchführen sollen. In DE 101 14 187 A1 wird ein Fahrerassistenzsystem beschrieben, dass einen Fahrer bei einem Überholvorgang unterstützen soll.

Alle derartigen aus der Praxis bekannten Verbesserungsansätze bezwecken, für eine ausgewählte Fahrsituation die Funktionalität des Fahrerassistenzsystems bzw. der adaptiven Abstandsregelanlage zu verbessern und zu erweitern, um eine Deaktivierung des Fahrerassistenzsystems hinauszuzögern und gegebenenfalls überflüssig werden zu lassen. Nachteilig ist hierbei jedoch, dass es sich dabei in allen bekannten Fällen lediglich um eine verbesserte Erfassung, Interpretation und Reaktion zu einer vorgegebenen Fahrsituation handelt, ohne dass ein einheitliches Konzept für die Bewältigung ähnlicher Situationen bereits gestellt würde.

Eine automatisierte Erkennung und Interpretation unterschiedlicher Fahrsituationen verbunden mit einer ebenfalls automatisiert ausgewählten Reaktion, bzw. verbunden mit der Durchführung eines daran angepassten Fahrmanöver ist technisch nur mit einem erheblichen Aufwand denkbar und auf Grund der damit verbundenen Risiken im Hinblick auf die gewünschte Fahrsicherheit bzw. Verkehrssicherheit kaum denkbar. In der Praxis verursachen insbesondere mehrdeutige Fahrsituationen kaum überwindbare Schwierigkeiten, wenn also mehrere Fahrmanöver möglich wären, ohne dass mit den verfügbaren Informationen ein eindeutig favorisiertes Fahrmanöver automatisiert ermittelt und durchgeführt werden kann.

Als Aufgabe der vorliegenden Erfindung wird es deshalb angesehen, dass ein Verfahren zur Steuerung eines Fahrerassistenzsystems entwickelt wird, welches dem Fahrer die Möglichkeit gibt, in der gewünschten Weise die Abläufe des Fahrerassistenzsystems zu beeinflussen und dadurch eine Deaktivierung des Fahrerassistenzsystems seltener erforderlich werden zu lassen, um die Akzeptanz und das Komfortempfinden durch den Fahrer zu erhöhen.

Erfindungsgemäß wird diese Aufgabe dadurch gelöst, dass mehrere Fahrmanöver zur Auswahl angeboten werden und dass ein ausgewähltes Fahrmanöver aktiviert und solange durchgeführt wird, bis das ausgewählte Fahrmanöver entweder abgeschlossen ist oder durch ein automatisiertes oder manuelles Eingreifen abgebrochen wird. Auf diese Weise lassen sich verschiedene vorgebbare Fahrmanöver in einem einheitlichen Bedienkonzept zusammenfassen und von dem Fahrer in Abhängigkeit von der jeweiligen Fahrsituation auswählen, ohne dass das Fahrerassistenzsystem nach der Durchführung eines Fahrmanövers deaktiviert und mit neuen Parametern erneut aktiviert werden müsste, oder durch ein anderes Fahrerassistenzsystem für eine veränderte Verkehrssituation und dessen Aktivierung ersetzt werden müsste. Ein permanenter Wechsel zwischen "selbst fahren" und "überwachen" wird vermieden. Gleichzeitig verbleibt die Entscheidung über das jeweils situationsangepasste Fahrmanöver und die weitgehende Kontrolle der durch das Fahrerassistenzsystem geregelten Fahreigenschaften bei dem Fahrer, wodurch sich die Akzeptanz des Fahrerassistenzsystems wesentlich verbessert. Die fehleranfällige Interpretation einzelner Fahrsituationen und eine mit erheblichen Risiken behaftete automatisierte Auswahl unterschiedlicher Fahrmanöver ist nicht erforderlich, wodurch die Fahr- und Verkehrssicherheit gewährleistet und gleichzeitige das Komfortempfinden des Fahrers verbessert werden können.

Vorzugsweise ist vorgesehen, dass die zur Auswahl angebotenen Fahrmanöver eine Abstandsregelung und/oder eine Veränderung des Abstands zu einem vorgegebenen Zielobjekt und/oder einen Wechsel des Zielobjekts und/oder eine Kombination dieser Fahrmanöver beinhalten. Neben der bereits bekannten adaptiven Abstandsregelung können auf diese Weise zusätzlich Fahrmanöver erleichtert oder vollständig automatisiert durchgeführt werden, die beispielsweise ein Überholen des bislang vorausfahrenden Fahrzeugs oder ein Zurückfallenlassen beinhalten, um fremden Fahrzeugen das Einscheren zu ermöglichen und das eigene Fahrverhalten daran anzupassen. Obwohl eine Veränderung der eigenen Fahrgeschwindigkeit wie auch Fahrstreifenwechsel oder Überholvorgänge von darauf spezialisierten Fahrerassistenzsystemen jeweils gesondert unterstützt werden, wird mit einem zentralen Anbieten der einzelnen Fahrmanöver innerhalb eines einheitlichen Bedienkonzepts erstmals die Kombination einzelner, an unterschiedliche Fahrsituationen jeweils gesondert angepasster Fahrmanöver zur Auswahl durch den Fahrer in einem einzigen Fahrerassistenzsystem ermöglicht.

Die Funktionalität des mehrere unterschiedliche Fahrmanöver beinhaltenden Fahrerassistenzsystems kann beispielsweise dadurch erweitert und an weitere Fahrsituationen angepasst werden, dass die zur Auswahl angebotenen Fahrmanöver eine Zielbremsfunktion beinhalten. Dabei kann die Zielbremsfunktion entweder durch den Fahrer als eigenständiges Fahrmanöver ausgewählt und von dem Fahrerassistenzsystem durchgeführt werden oder aber als Bestandteil anderer Fahrmanöver den empfundenen Fahrkomfort und die Verkehrssicherheit dadurch erhöhen, dass beispielsweise in Gefahrsituationen keine unangemessene bzw. übermäßige Bremsverzögerung eingeleitet wird, sondern im Hinblick auf den gewünschten oder automatisiert ermittelten Zielpunkt ein daran angepasstes Bremsmanöver mit einer möglichst geringen, jedoch ausreichenden Bremsverzögerung durchgeführt wird. Dabei kann die Bremsverzögerung während der Durchführung des Bremsmanövers auch verändert werden, um beispielsweise ruckartige Änderungen der Beschleunigung bzw. der Geschwindigkeit möglichst zu vermeiden.

Weiterhin kann auch eine Anfahrfunktion als eigenständiges Fahrmanöver vorgesehen sein, mit welchem das Fahrzeug aus dem Stillstand heraus in Bewegung versetzt und auf eine vorgebbare oder von dem Fahrerassistenzsystem ermittelte Zielgeschwindigkeit beschleunigt werden kann. Die Anfahrfunktion kann sowohl als erstes Fahrmanöver bei Beginn einer Fahrmission als auch als eines von mehreren Fahrmanövern während der Steuerung durch das Fahrerassistenzsystem angewählt, bzw. durchgeführt werden. So könnte das Fahrerassistenzsystem beispielsweise während eines Staus und einer ständigen Abbremsung in den Stillstand oder nach einem Zielbremsmanöver das Fahrzeug automatisiert wieder in Bewegung versetzen und beispielsweise ein ursprünglich vorgegebenes Fahrmanöver wieder fortsetzen.

Um die Unterstützung des Fahrers bei verschiedenen Fahrmanövern zu verbessern und zu erweitern ist vorgesehen, dass die zur Auswahl angebotenen Fahrmanöver einen Fahrstreifenwechsel beinhalten. Auf diese Weise wird nicht nur eine Anpassung der Geschwindigkeit des eigenen Fahrzeugs an ein auf dem selben Fahrstreifen vorausfahrendes Fahrzeug, an ein auf einem benachbarten Fahrstreifen fahrendes Fahrzeug oder an ein vorgegebenes Anfahr- oder Abbremsfahrmanöver in das Fahrerassistenzsystem eingebunden, sondern auch ein weitgehend automatisch durchgeführter Wechsel des Fahrstreifens ermöglicht. Insbesondere auf langen Autobahnfahrten kann auf diese Weise eine durchgehende Unterstützung des Fahrers durch das Fahrerassistenzsystem bei allen erforderlichen Fahrmanövern erfolgen, ohne dass ein manueller Eingriff notwendig wird oder das Fahrerassistenzsystem ständig unterbrochen und erneut aktiviert werden müsste.

Um zu vermeiden, dass bei einem mit dem Fahrerassistenzsystem eingeleitetem Fahrstreifenwechsel zu einem übermäßigen Kollisionsrisiko mit Fahrzeugen führt, die auf dem angestrebten Fahrstreifen fahren und sich von hinten dem eigenen Fahrzeug nähern ist vorgesehen, dass ein Fahrstreifenwechsel nur dann zur Auswahl angeboten wird, wenn bei einer Auswertung einer rückwärts gerichteten Umfeldsensorik ein ermitteltes Kollisionsrisiko mit anderen Verkehrsteilnehmern unterhalb eines vorgebbaren Risikogrenzwerts liegt.

Die Umfeldsensorik muss dabei in geeigneter Weise aktiviert oder ausgewertet werden, um sicherstellen zu können, dass bei einem Verbleib auf dem eigenen Fahrstreifen beispielsweise links überholende Fahrzeuge keine Veränderung der eigenen Geschwindigkeit oder einen Wechsel des eigenen Fahrstreifens erzwingen, während bei einem angestrebten Fahrstreifenwechsel auf diesem Fahrstreifen von hinten sich nähernde Fahrzeuge erfasst und deren Kollisionsrisiko mit dem eigenen Fahrzeug berücksichtigt wird.

Sollte das sich von hinten nähernde Fahrzeug mit einer größeren Geschwindigkeit unterwegs sein, so dass ein Auffahren des hinteren Fahrzeugs bei einem Wechsel auf diesen Fahrstreifen mit der derzeitigen, bzw. während des Fahrstreifenwechsels erreichten Geschwindigkeit nicht ausgeschlossen werden kann, so kann ein Wechsel auf diese Fahrstreifen von dem Fahrerassistenzsystem entweder nicht angeboten oder nach einem Angebot und einer Auswahl durch den Fahrer nicht durchgeführt oder sogar abgebrochen werden.

Sofern auch ein Spurhalteassistenzsystem in das Fahrerassistenzsystem eingebunden und üblicherweise aktiviert ist, wird das Spurhalteassistenzsystem während eines Wechsels des Fahrstreifens deaktiviert oder unterdrückt, um den angestrebten Fahrstreifenwechsel nicht zu behindern. Anschließend kann das Spurhalteassistenzsystem wieder automatisch aktiviert werden, um ohne einen erneuten Eingriff des Fahrers das Fahren erneut zu unterstützen.

Es ist ebenfalls möglich, den Wechsel des Fahrstreifens weitgehend automatisiert mit Hilfe eines weiterentwickelten Spurhalteassistenzsystems durchzuführen. Das weiterentwickelte Spurhalteassistenzsystem kann zu diesem Zweck einen benachbarten Fahrstreifen erfassen und dessen Ränder als neue Vorgaben übernehmen, um anschließend den Fahrstreifenwechsel des Fahrzeugs beispielsweise geschwindigkeitsangepasst durchzuführen.

Einer Ausgestaltung des Erfindungsgedankens zufolge ist vorgesehen, dass in Abhängigkeit von dem Fahrmanöver mindestens ein Sollparameter ermittelt und bei der Aktivierung und der Durchführung des Fahrmanövers berücksichtig wird. Ein Sollparameter ist dabei ein automatisiert ermittelter, zeitlich variabler Wert für eine Fahrzustands- oder Bewegungsgröße, die bei der Durchführung des Fahrmanövers eingehalten oder erreicht werden soll. Würde beispielsweise eine für ein betreffendes Fahrmanöver ermittelte Sollbeschleunigung eine ebenfalls vorgebbare maximale Beschleunigung oder eine maximale Änderung der Beschleunigung während der Fahrt übersteigen, so kann das betreffende Fahrmanöver entweder nicht durchgeführt oder aber in einer modifizierten Art und Weise durchgeführt werden, um übermäßige Änderungen in der Beschleunigung des Fahrzeugs zu vermeiden, die sowohl das Komfortempfinden als auch die Fahrsicherheit beeinträchtigen könnten.

In besonders vorteilhafter Weise ist vorgesehen, dass mindestens ein Parameter während der Durchführung eines Fahrmanövers veränderbar ist. Bei dem Parameter kann es sich beispielsweise um die eigene Fahrgeschwindigkeit oder einen Abstand zu einem vorausfahrenden bzw. demnächst relevant werdenden Zielobjekt handeln. Regelmäßig wird es sich jedoch um einen Parametersatz handeln, also um mehrere Parameter, die in einer Beziehung zueinander stehen und bei der Durchführung des Fahrmanövers berücksichtigt werden.

Einer vorteilhaften Ausgestaltung des Erfindungsgedankens zufolge ist vorgesehen, dass mindestens ein Parameter für einen vorgebbaren Zeitraum verändert und anschließend wieder auf den vorherigen Wert zurückgesetzt werden kann. So kann beispielsweise im Bereich von Ein- und Ausfahrten einer Autobahn ein vorgegebener Abstand zu einem vorausfahrenden Fahrzeug kurzfristig vergrößert oder verringert werden, um auf die Autobahn auffahrenden oder die Autobahn verlassenden Fahrzeugen das jeweilige Fahrmanöver zu erleichtern, ohne dass anschließend durch den Fahrer der ursprünglich gewünschte wunschabstand oder die bisherige Wunschgeschwindigkeit wieder erneut eingestellt bzw. vorgegeben werden müssen. So können auch beispielsweise räumlich begrenzte Geschwindigkeitsbeschränkungen beispielsweise in Baustellenbereichen in einfacher Weise berücksichtigt und das Fahrerassistenzsystem veranlasst werden, in angemessener Weise sich an die geänderten Umgebungsbedingungen anzupassen, ohne dass ein mehrfacher, gegebenenfalls aufwendiger und während der Fahrt störender Eingriff durch den Fahrer erforderlich wird.

Um dem Fahrer eine Auswahl zu erleichtern und die Konzentration des Fahrers nicht unangemessen zu beeinträchtigen ist optional vorgesehen, dass die jeweils aktuell angebotenen Fahrmanöver optisch angezeigt werden. Zusätzlich kann vorgesehen sein, dass auch während der Durchführung eines Fahrmanövers manöverspezifische Informationen optisch angezeigt werden. Die optische Anzeige kann dabei beispielsweise über ein ergonomisch günstig angeordnetes Display oder über ein in die Windschutzscheibe projiziertes Display bzw. ein Head-Up-Display erfolgen. Auch könnte eine Integration der Anzeige in dem Bedienelement, beispielsweise mit Leuchtdioden oder einem Grafikdisplay, erfolgen. Zusätzlich oder an Stelle einer optischen Anzeige kann auch eine akustische oder eine haptische, bzw. taktile Anzeige vorgesehen sein.

Insbesondere im Falle einer Warnung des Fahrerassistenzsystems vor einer drohenden gefährlichen Fahrsituation können zusätzlich zu einer optischen Anzeige auch akustische Anzeigen oder auch beispielsweise haptische Signale erfolgen.

Es ist möglich, dass vor einer Aktivierung eines Fahrmanövers eine Plausibilitätskontrolle durchgeführt wird. Die Plausibilitätskontrolle beinhaltet unter Anderem automatisierte Prüfungen, ob das betreffende Fahrmanöver in der aktuell ermittelten Fahrsituation überhaupt durchführbar wäre und ob das betreffende Fahrmanöver im Einklang mit vorgegebenen Randbedingungen durchgeführt werden könnte. Für diese Plausibilitätskontrolle können unter Anderem ergänzende Informationen von Fahrdynamik- und Umfeldsensoren herangezogen und berücksichtigt werden. Während üblicherweise der Fahrer das von ihm gewünschte Fahrmanöver auswählen und durch das Fahrerassistenzsystem automatisiert durchführen lassen kann, könnte eine Plausibilitätskontrolle beispielsweise dazu dienen, die zur Auswahl für den Fahrer angebotenen Fahrmanöver vorab zu überprüfen und lediglich eine kleine unterauswahl anzubieten.

Um dem Fahrer die Entscheidung über ein situationsangepasstes Verhalten bzw. eine entsprechende Einwirkung auf das Fahrerassistenzsystem zu erleichtern, kann vorgesehen sein, dass nur diejenigen Fahrmanöver, welche eine kontinuierlich im Hintergrund durchgeführte Plausibilitätskontrolle bestehen, zur Auswahl angeboten werden. Dies kann damit einhergehen, dass auch nur die zur Auswahl angebotenen Fahrmanöver optisch angezeigt werden und aktivierbar sind. Der Fahrer kann dann auf einen Blick erfassen, welche Fahrmanöver situationskonform bzw. situationsangepasst sind und schneller und zielgerichteter eine Entscheidung treffen. Die Konzentration des Fahrers wird auf diese Weise so gering wie möglich beeinträchtigt. Die angebotenen und aktivierbaren Fahrmanöver können nach der Auswahl durch den Fahrer zuverlässig in angemessener Weise parametriert und durchgeführt werden.

Die Erfindung betrifft auch ein Fahrerassistenzsystem. Das Fahrerassistenzsystem weist eine erste Sensoreinrichtung zur Erfassung von Fahrzustands- und Bewegungsgrößen eines Kraftfahrzugs und eine zweite Sensoreinrichtung zur Erfassung von vor dem Kraftfahrzeug befindlichen bewegten Objekten sowie eine Steuereinrichtung zur Steuerung von mit dem Fahrerassistenzsystem steuerbaren Fahreigenschaften oder Fahrmanöver auf, wobei das Fahrerassistenzsystem erfindungsgemäß ein Bedienelement mit mindestens drei Auswahlpositionen aufweist. Mittels der verschiedenen Auswahlpositionen können unterschiedliche Fahrmanöver von dem Fahrer ausgewählt und zur Durchführung durch das Fahrerassistenzsystem aktiviert werden. Im Gegensatz zu mehreren gesonderten Bedienelementen wie beispielsweise Wipp- oder Drucktastenschaltern wird durch das eine Bedienelement, das in mehrere verschiedene Auswahlpositionen verlagerbar ist, das jeweils gewünschte Fahrmanöver in einfacher Weise und komfortabel vorgegeben, ohne dass eine gesonderte Deaktivierung eines vorausgegangenen und gegebenenfalls noch andauernden Fahrmanövers durch entsprechende Betätigung eines ausschließlich diesem Fahrmanöver zugeordneten Bedienelements erforderlich wird.

vorzugsweise ist vorgesehen, dass das Bedienelement in mindestens zwei verschiedenen Richtungen jeweils zwei oder mehrere verschiedene Auswahlpositionen aufweist. Die verschiedenen Richtungen können beispielsweise senkrecht zueinander und von dem Fahrzeug ausgehend in verschiedene Richtungen zeigend ausgerichtet sein. So könnte das Bedienelement beispielsweise sowohl nach vorne als auch nach hinten bzw. nach links und nach rechts verlagert oder in die entsprechende Richtung betätigt werden.

Den jeweiligen Richtungen können entsprechende Fahrmanöver wie beispielsweise Beschleunigen ("vorne")oder Abbremsen bzw. den Abstand vergrößern ("hinten") oder aber geplanter Fahrstreifenwechsel ("links") oder ("rechts") zugeordnet werden, so dass eine intuitive Bedienung des Fahrerassistenzsystems und eine eingängige und einfach zu merkende Zuordnung bzw. Auswahl der einzelnen Fahrmanöver über die entsprechenden Auswahlpositionen des Bedienelements ermöglicht werden kann.

Gemäß einer besonders vorteilhaften Ausgestaltung des Erfindungsgedankens ist vorgesehen, dass das Bedienelement ein aus einer Ruheposition in vier, vorzugsweise in acht verschiedene Richtungen auslenkbares Betätigungselement aufweist. Das Betätigungselement kann beispielsweise ein zusätzlich drehbar gelagerter, zusätzlich eine Tastenfunktion aufweisender Drehknopf oder aber ein Schaltknopf oder Joystick sein. Den vier Grundrichtungen können vier unterschiedliche Fahrmanöver zugeordnet werden. Den vier vorzugsweise diagonal bzw. mittig zwischen den Grundrichtungen angeordneten Auswahlpositionen können jeweils Kombinationen der benachbarten Grundfunktionen bzw.

Fahrmanöver zugeordnet werden. So könnte beispielsweise eine Auslenkung des Bedienelements diagonal nach vorne links ein Fahrmanöver zum Überholen des bislang vorausfahrenden Fahrzeugs und damit einer Kombination zwischen einem Fahrstreifenwechsel nach links ("links") und einem Beschleunigen des eigenen Fahrzeugs bei gleichzeitiger Verkürzung des Abstands zu dem vorausfahrenden Fahrzeug ("vorne") einleiten.

Gemäß einer besonders vorteilhaften Ausgestaltung des Erfindungsgedankens ist vorgesehen, dass das Bedienelement einen Bedienknopf aufweist, der in mindestens einer auslenkbaren Richtung einen überwindbaren haptischen Widerstand aufweist, der zwei verschiedene Auswahlpositionen voneinander abgrenzt. Auf diese Weise ist es möglich, mittels eines beispielsweise in vier Grundrichtungen auslenkbaren Bedienknopfs, bzw. Joysticks insgesamt doppelt so viele, nämlich acht verschiedene Auswahlpositionen anzusteuern. Die mit der jeweiligen Auswahlposition verbundenen Fahrmanöver können dabei so zugeordnet werden, dass sich für den Fahren eine intuitive Bedienung ergibt.

So könnte beispielsweise eine Manöverauswahl durch das Bedienelement angeboten werden, bei der eine Auslenkung des Bedienelements nach links zunächst die Geschwindigkeitsregelung an ein auf dem linken Fahrstreifen fahrendes Fahrzeug anpasst, wobei ein gegebenenfalls auf dem eigenen Fahrstreifen vorausfahrendes Fahrzeug berücksichtigt wird. Durch eine weitere Auslenkung des Bedienelements weiter nach links und über den haptischen Widerstand hinweg könnte ein weiteres Fahrmanöver mit einem durch das Fahrerassistenzsystem unterstützten Wechsel auf den linken Fahrstreifen eingeleitet werden.

Ein Wechsel des Fahrstreifens kann auch bei einer Auswahl eines diagonal anwählbaren Fahrmanövers aktiviert und eingeleitet werden. Es ist ebenfalls denkbar, dass ein von dem Fahrerassistenzsystem zur Auswahl angebotener Wechsel des Fahrstreifens durch einen Ruck an dem Lenkrad eingeleitet wird.

Bei Verwendung eines Bedienelements mit einem Bedienknopf, der zumindest in die vier Grundrichtungen ausgelenkt werden kann, kann ein Wechsel des Fahrstreifens auch durch eine doppelte, bzw. innerhalb eines kurzen Zeitabstands wiederholte Auslenkung des Bedienknopfs nach links oder nach rechts, durch eine Überwindung eines haptischen Widerstands oder durch ein gleichzeitiges Drücken oder Verdrehen des Bedienknopfs während einer Auslenkung nach links oder rechts ausgewählt werden.

Sofern das Fahrerassistenzsystem auch mit einem Spurhalteassistenzsystem verbunden ist, das ein Fahrstreifenwechselmanöver behindern könnte, wird bei der Auswahl eines Fahrstreifenwechselmanövers das Spurhalteassistenzsystem automatisch beendet oder unterdrückt, bis das Fahrstreifenwechselmanöver abgeschlossen ist, um anschließend das Spurhalteassistenzsystem wieder zu aktivieren und dessen Unterdrückung zu beenden. Sofern das Spurhalteassistenzsystem den Fahrstreifenwechsel unterstützen oder gegebenenfalls automatisch durchführen kann, kann das Spurhalteassistenzsystem auch aktiviert bleiben oder sogar unterstützend für das Fahrmanöver von dem Fahrerassistenzsystem herangezogen und eingebunden werden.

Um eine einfache und rasche Information des Fahrers über den derzeitigen Zustand des Fahrerassistenzsystems und die in diesem Moment zur Verfügung stehenden Fahrmanöver zu ermöglichen, ist vorzugsweise vorgesehen, dass das Fahrerassistenzsystem eine Anzeigevorrichtung aufweist. Dabei handelt es sich beispielsweise um ein in die Windschutzscheibe projiziertes Head-up-Display. Es sind natürlich auch andere optische oder akustische Anzeigevorrichtungen denkbar.

Insbesondere bei Verwendung eines Head-Up-Displays oder einer anderen optischen Anzeigevorrichtung mit ausreichend großer Fläche für die Informationswiedergabe kann in vorteilhafter Weise während der Durchführung eines Manövers mindestens ein Manöverparameter angezeigt werden. Dabei könnte es sich beispielsweise um einen bei freier Fahrt eingeblendeten Bremsbalken für die voraussichtlich erforderliche Länge des Bremswegs oder um einen Abstandsbalken bei einer von dem Fahrerassistenzsystem durchgeführten Folgefahrt zu einem vorausfahrenden Fahrzeug handeln.

Nachfolgend werden Ausgestaltungen des Erfindungsgedankens näher erläutert, die in der Zeichnung dargestellt sind. Es zeigt:
Fig. 1 eine schematische Darstellung eines Bedienelements für ein Fahrerassistenzsystem, welches ausgehend von einer Ausgangsposition in acht verschiedene Auswahlpositionen verlagerbar ist,
Fig. 2 ein schematisches Flussdiagramm für die einzelnen Verfahrensabläufe während des aktiven Zustands des Fahrerassistenzsystems,
Fig. 3 eine detaillierte Darstellung der einzelnen Verfahrensschritte, die von dem Fahrerassistenzsystem durchgeführt werden können,
Fig. 4 eine schematische Darstellung eines ersten Fahrmanövers,
Fig. 5 eine schematische Darstellung eines zweiten Fahrmanövers,
Fig. 6 eine schematische Darstellung eines dritten Fahrmanövers,
Fig. 7 eine schematische Darstellung eines vierten Fahrmanövers,
Fig. 8 eine schematische Darstellung eines fünften Fahrmanövers,
Fig. 9 eine schematische Darstellung des in Fig. 1 dargestellten Bedienelements für ein Fahrerassistenzsystem mit erweiterter Funktionalität,
Fig. 10 eine schematische Darstellung eines Bedienelements gemäß Fig. 9 mit einer geänderten Bedienung,
Fig. 11 eine schematische Darstellung eines sechsten Fahrmanövers und
Fig. 12 eine schematische Darstellung eines siebten Fahrmanövers.

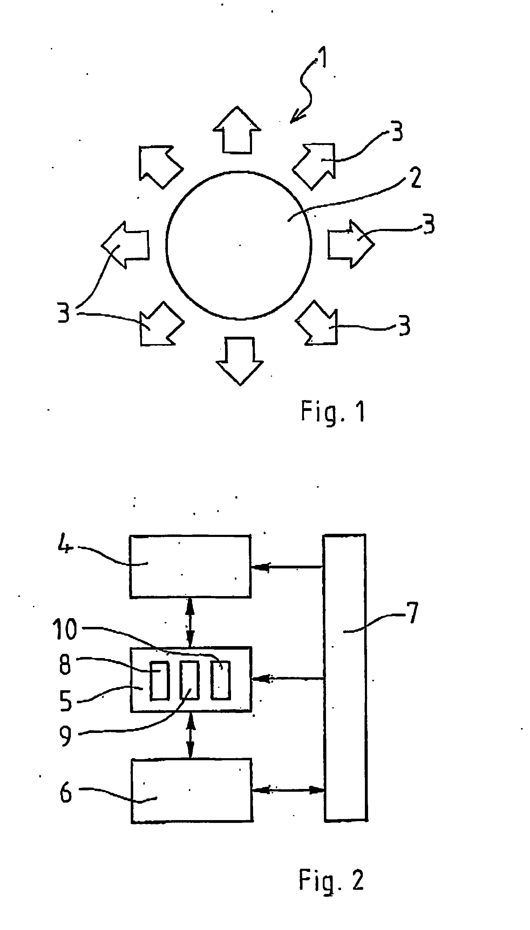

Das in Fig. 1 schematisch dargestellte Bedienelement 1 weist einen im Wesentlichen zylinderförmigen flachen Bedienknopf 2 auf. Der Bedienknopf 2 kann in acht verschiedene Richtungen in jeweils eine zugeordnete Auswahlposition 3 ausgelenkt werden. Zusätzlich weist das Bedienelement 1 bzw. der Bedienknopf 2 eine durch Druck aktivierbare Tastenfunktion auf, wobei der Bedienknopf 2 auch rastend in der eingedrückten, aktivierten Position festlegbar sein kann. Der Bedienknopf 2 kann darüber hinaus drehbar gelagert sein, um eine Auswahl zusätzlicher Fahrmanöver oder Funktionen bzw. die Vorgabe eines für ein Fahrmanöver erforderlichen Parameters mittels Verdrehen des Bedienknopfs 2 zu ermöglichen. Weiterhin könnte beispielsweise in der Mitte des Bedienknopfs 2 ein zusätzlicher Schalter zum Anschalten und Abschalten angeordnet sein.

Es kann auch vorgesehen sein, dass auf den Bedienknopf 2 mit zunehmender Auslenkung aus seiner mittigen Ausgangsposition eine größer werdende Rückstellkraft einwirkt und der Betrag der Auslenkung bzw. der Abstand des Bedienknopfs 2 von der Ausgangsposition eine zusätzliche Steuerungsmöglichkeit bzw. Parametervorgabe an die von dem Fahrerassistenzsystem angebotenen und von diesem System durchgeführten Fahrmanöver ermöglicht.

In Fig. 2 ist eine schematische Übersicht möglicher Interaktionen zwischen dem Fahrer 4, dem Fahrerassistenzsystem 5, dem Fahrzeug 6 und der Umgebung 7 dargestellt. Ausgehend von einer aktuellen Fahrersituation bzw. von Einflüssen aus der Umgebung 7 beabsichtigt der Fahrer 4, ein neues Fahrmanöver durchzuführen oder ein derzeit durchgeführtes Fahrmanöver zu verändern. Über eine Schnittstelle 8 des Fahrerassistenzsystems 5, die beispielsweise ein in Fig. 1 dargelegtes Bedienelement 1 sowie eine Anzeigenvorrichtung 9 und eine Steuereinrichtung 10 aufweist, wird die beabsichtigte Änderung oder Aktivierung eines Fahrmanövers von dem Fahrer 4 an das Fahrerassistenzsystem 5 übermittelt. Das Fahrerassistenzsystem 5 führt das gewünschte Fahrmanöver durch oder ändert entsprechend den Vorgaben des Fahrers 4 vorgebbare Parameter eines aktuell durchgeführten Fahrmanövers und wirkt dadurch auf das Fahrzeug 6 ein. Zu diesem Zweck kann das Fahrerassistenzsystem 5 unter anderem die Ansteuerung bzw. Regelung des Motors oder der Bremssysteme des Fahrzeugs 6 durchführen oder beeinflussen.

Die sich während dieser Durchführung des Fahrmanövers ständig verändernde Umgebung 7 wirkt dabei sowohl auf das Fahrzeug 6 als auch auf das Fahrerassistenzsystem 5 ein, welches zu diesem Zweck geeignete Umgebungssensoren, wie beispielsweise Radar oder Lidar bzw. eine an eine Kamera angeschlossene Bildverarbeitung oder eine "Car-to-car"-Kommunikationseinrichtung aufweist. Auch der Fahrer 4 nimmt die sich ändernde Umgebung 7 wahr.

Das Fahrzeug 6 kann seinerseits entsprechende Rückmeldungen oder mittels geeigneter Sensoren ermittelte Eigenschaften und Zustandsgrößen an das Fahrerassistenzsystem 5 übertragen und beispielsweise im Gefahrenfall über das Fahrerassistenzsystem 5 und gegebenenfalls auch unter Umgehung des Fahrerassistenzsystems 5 den Fahrer 4 frühzeitig informieren. Eine direkte Beeinflussung des Fahrzeugs 6 durch den Fahrer 4 kann während des Betriebs des Fahrerassistenzsystems 5 weitestgehend vermieden und auf Notsituatianen beschränkt werden.

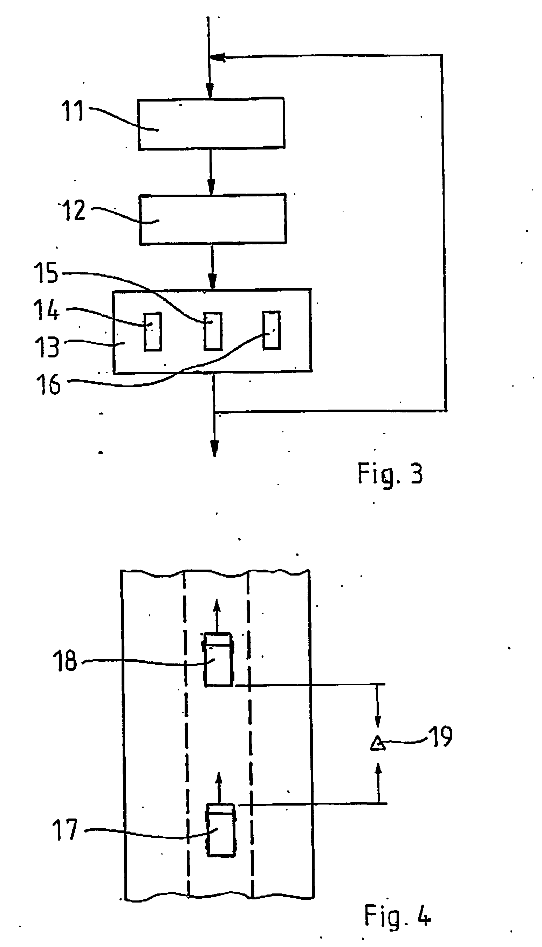

In Fig. 3 werden einzelne Aspekte der von dem Fahrerassistenzsystem 5 durchgeführten Verfahrensabläufe detailliert dargestellt. Im Anschluss an eine durch die Schnittstelle 8 an das Fahrerassistenzsystem 5 übermittelte Vorgabe des Fahrers 4, bzw. dessen Auswahl eines beabsichtigten Fahrmanövers, wird zunächst in einem ersten Verfahrensschritt eine Plausibilitätsprüfung 11 durchgeführt. Für die Plausibilitätsprüfung 11 werden unter anderem Informationen aus der Umgebung 7 bzw. von dem Fahrzeug 6 berücksichtigt, die durch geeignete Sensorsysteme erfasst und dem Fahrerassistenzsystem 5 zugeführt werden können.

Wenn das von dem Fahrer 4 gewünschte Fahrmanöver möglich und beispielsweise im Hinblick auf einzuhaltende Randbedingungen für Fahreigenschaften wie maximale Beschleunigung oder Bremsmanöver auch durchführbar ist, wird in einem nächsten Verfahrensschritt eine Fahrmanöverplanung 12 durchgeführt. Im verlauf der Fahrmanöverplanung 12 erfolgt die Ermittlung der relevanten Parameter, die während der Durchführung des Fahrmanövers durch das Fahrerassistenzsystem 5 vorgegeben und kontrolliert werden sollen. In die Fahrmanöverplanung 12 können zusätzliche Vorgaben des Fahrers 4, die dieser über das Bedienelement 1 der Schnittstelle 8 an das Fahrerassistenzsystem 5 übermittelt, berücksichtigt werden.

Im Anschluss daran folgt in einem weiteren verfahrensschritt die Durchführung 13 des Fahrmanövers. Die Durchführung 13 beinhaltet die Auswahl und Kontrolle 14 eines vorausfahrenden Zielobjekts, die Ermittlung und Ausführung einer Trajektorie mit einem vorgegebenen zeitlichen Verlauf beispielsweise durch Vorgabe 15 einer Sollbeschleunigung sowie die Vorgabe 16 eines Sollabstands zu dem vorausfahrenden Zielobjekt. Durch eine entsprechende Ansteuerung beispielsweise eines Motors oder eines Bremssystems des Fahrzeugs 6 wirkt das Fahrerassistenzsystem 5 während der Durchführung 13 des Fahrmanövers auf das Fahrzeug 6 ein. Gleichzeitig werden während der Durchführung 13 des Fahrmanövers relevante Informationen an die Schnittstelle 8 übermittelt, um optische und gegebenenfalls akustische Anzeigen durch die Anzeigevorrichtung zu ermöglichen. Nach Abschluss der Durchführung 13 des ausgewählten Fahrmanövers kehrt das Fahrerassistenzsystem 5 in eine Grundfunktion (beispielsweise konventionelles ACC) zurück und führt diese Grundfunktion, bzw. das dadurch vorgegebene Fahrmanöver aus, solange das Fahrerassistenzsystem 5 aktiviert ist, bzw. bleibt.

In den Fig. 4-8 werden schematisch verschiedene Fahrmanöver dargestellt, die über das Fahrerassistenzsystem 5 dem Fahrer 4 zur Auswahl angeboten werden und nach den Vorgaben des Fahrers 4 durchgeführt werden können.

Das bei einem aktivierten Fahrerassistenzsystem 5 in der Ausgangsstellung des Bedienknopfs 2 durchgeführte Fahrmanöver entspricht der aus der Praxis bereits bekannten adaptiven Abstandsregelung zu einem vorausfahrenden Fahrzeug (ACC). In dieser Stellung des Bedienknopfs 2 regelt das Fahrerassistenzsystem 5 ausgehend von einer Wunschgeschwindigkeit und einer Wunschzeitlücke einen Abstand eines eigenen Fahrzeugs 17 zu einem vorausfahrenden Fahrzeug 18 selbsttätig ein. wird der Bedienknopf 2 aus einer anderen Auswahlposition 3 in die Ausgangsposition zurück verlagert bzw. betätigt, so werden zwischenzeitlich aktivierte Funktionen des Fahrerassistenzsystems 5 auf die Grundfunktionen ACC zurückgesetzt und insbesondere andere Fahrmanöver beendet und wieder die adaptive Abstandsregelung vorgenommen.

Das in Fig. 4 schematisch dargestellte Fahrmanöver verringert einen Abstand 19 (beispielsweise dargestellt als räumlicher Abstand Δs oder zeitlicher Abstand Δt)des eigenen Fahrzeugs 17 zu dem vorausfahrenden Fahrzeug 18, welches als Zielobjekt von dem Fahrerassistenzsystem 5 erfasst und überwacht wird. Da zu diesem Zweck das eigene Fahrzeug 17 kurzzeitig beschleunigt bzw. dessen Geschwindigkeit erhöht werden muss, wird dieses Fahrmanöver in vorteilhafter Weise durch eine Verlagerung des Bedienknopfs 2 des Bedienelements 1 in Längsrichtung nach vorne aktiviert. Die Fahrzeuggeschwindigkeiten während der Durchführung 13 des Fahrmanövers werden jeweils durch Pfeile unterschiedlicher Länge angedeutet.

Es ist auch denkbar, dass in Abhängigkeit von dem aktuellen Bewegungszustand des Fahrzeugs 17 unterschiedliche Fahrmanöver mit einer Verlagerung des Bedienknopfs 2 ausgewählt werden können. So könnte beispielsweise bei einem Stillstand des eigenen Fahrzeugs 17 durch eine Verlagerung des Bedienknopfs 2 nach vorne ein automatisiertes Anfahrmanöver aktiviert und durchgeführt werden.

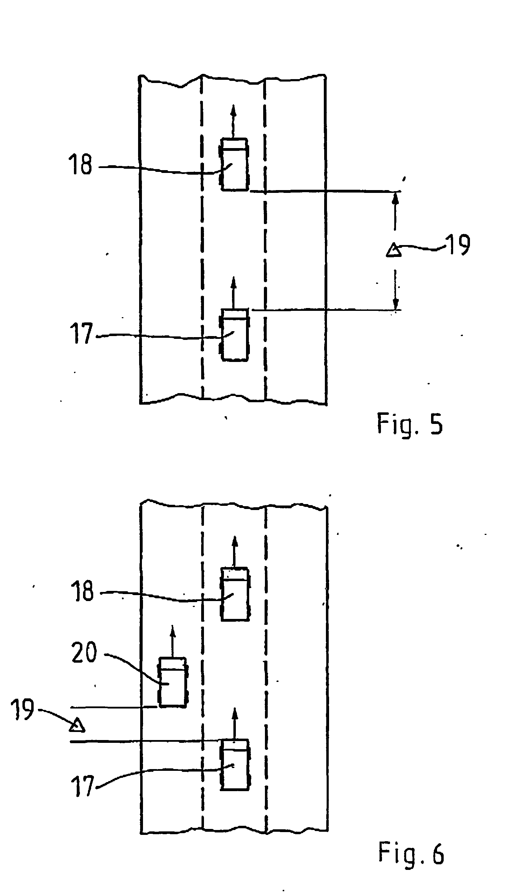

Das in Fig. 5 dargestellte Fahrmanöver bewirkt eine Vergrößerung des Abstands 19 des eigenen Fahrzeugs 17 zu dem vorausfahrenden Fahrzeug 18 und wird zweckmäßigerweise durch eine Verlagerung des Bedienknopfs 2 in Längsrichtung nach hinten aktiviert.

Ist aktuell kein vorausfahrendes Fahrzeug 18 von dem Fahrerassistenzsystem 5 erfasst und überwacht, so kann an Stelle der Veränderung des Abstands 19 eine Vergrößerung oder Verringerung der Geschwindigkeit des eigenen Fahrzeugs 17 bis hin zum vollständigen Stillstand vorgegeben werden. In Kombination mit einer visuellen Rückkopplung einer dadurch erreichbaren Stillstandsposition ermöglicht das Fahrerassistenzsystem 5 auf diese Weise auch eine vorgebbare Zielbremsung.

Bei dem in Fig. 6 dargestellten Fahrmanöver, das für eine intuitive Bedienung zweckmäßigerweise durch eine Verlagerung des Bedienknopfs 2 nach links aktiviert wird, wird das aktuell erfasste Zielobjekt gewechselt und ein seitlich versetzt relativ zu dem eigenen Fahrzeug 17 fahrendes Fahrzeug 20 als neues Zielobjekt erfasst. Ein analoges Fahrmanöver kann für ein seitlich nach rechts versetzt fahrendes Fahrzeug durch eine seitliche Betätigung des Bedienknopfs 2 nach rechts ausgewählt und aktiviert werden. Sollte das vorausfahrende Fahrzeug 18 den zu dem seitlichen zielobjekt vorgegebenen Abstand 19 uzlterschreiten, so könnte in Abhängigkeit von weiteren Bewegungsgrößen, wie beispielsweise einer Differenzgeschwindigkeit oder einer Differenzbeschleunigung vorsorglich das vorausfahrende Fahrzeug 18 wieder als Zielobjekt übernommen und die Abstandsregelung an dieses Zielobjekt angepasst werden, um beispielsweise ein unbeabsichtigtes Auffahren des eigenen Fahrzeugs 17 auf das vorausfahrende Fahrzeug 18 zu vermeiden.

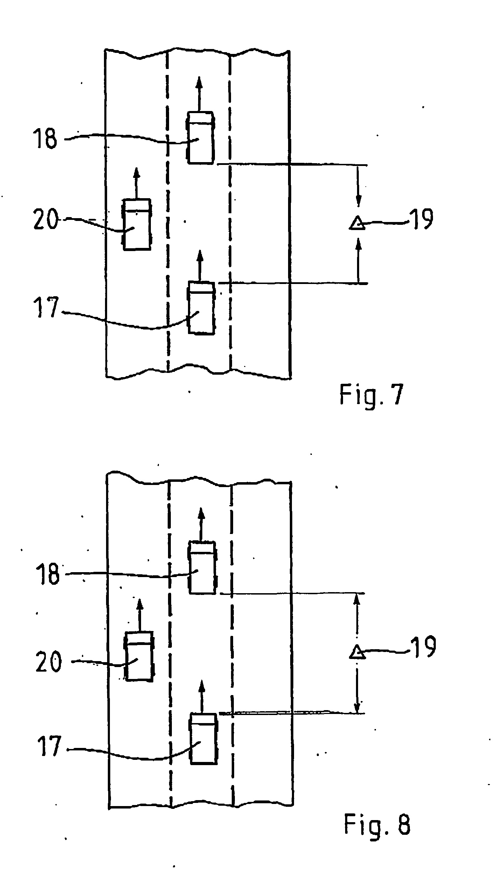

In den Fig. 7 und 8 sind über die diagonal angeordneten Auswahlpositionen 3 des Bedienknopfs 2 aktivierbare Fahrmanöver dargestellt, die jeweils eine Kombination der benachbarten Fahrmanöver "vorne" und "links", bzw. "links" und "hinten" beinhalten.

So wird bei einer Verlagerung des Bedienknopfs 2 nach "vorne links" (Fig. 7) das Zielobjekt auf ein links vorbei fahrendes Fahrzeug 20 verlagert, dem das eigene Fahrzeug 17 folgen soll, wobei gleichzeitig der Abstand 19 zu dem bislang vorausfahrenden Fahrzeug 18, dem bisherigen Zielobjekt, verkürzt werden kann. Ein derartiges Fahrmanöver kann einen Überholvorgang einleiten.

Bei einer Verlagerung des Bedienknopfs 2 nach "hinten links" (Fig. 8) kann der Abstand auf das vorausfahrende Fahrzeug 18 vergrößert und gleichzeitig ein seitlich fahrendes Fahrzeug 20 als neues Zielobjekt vorgegeben werden. Wenn das links fahrend Fahrzeug 20 durch Einscheren dieses Fahrzeugs 20 auf den eigenen Fahrstreifen wechselt oder der Fahrer 4 das eigene Fahrzeugs 17 auf den selben Fahrstreifen wie das Fahrzeug 20 wechseln lässt, wird die seitwärts gerichtete Orientierung bzw. Erfassung des Zielobjekts durch das Fahrerassistenzsystem 5 aufgegeben und in einen Modus einer herkömmlichen adaptiven Abstandsregelung (ACC) auf das neu als Zielobjekt übernommene Fahrzeug 20 gewechselt. Würde das seitlich fahrende Fahrzeug 20 jedoch innerhalb einer vorgebbaren Zeitdauer nicht auf den gleichen Fahrstreifen wie das eigene Fahrzeug 17 fahren, so könnte zeit- oder situationsgesteuert die seitliche Orientierung des Fahrerassistenzsystems 5 beendet und auf eine vorgebbare Grundfunktion des Fahrerassistenzsystems 5 wie beispielsweise auf die adaptive Abstandsregelung (ACC) zurückgekehrt werden.

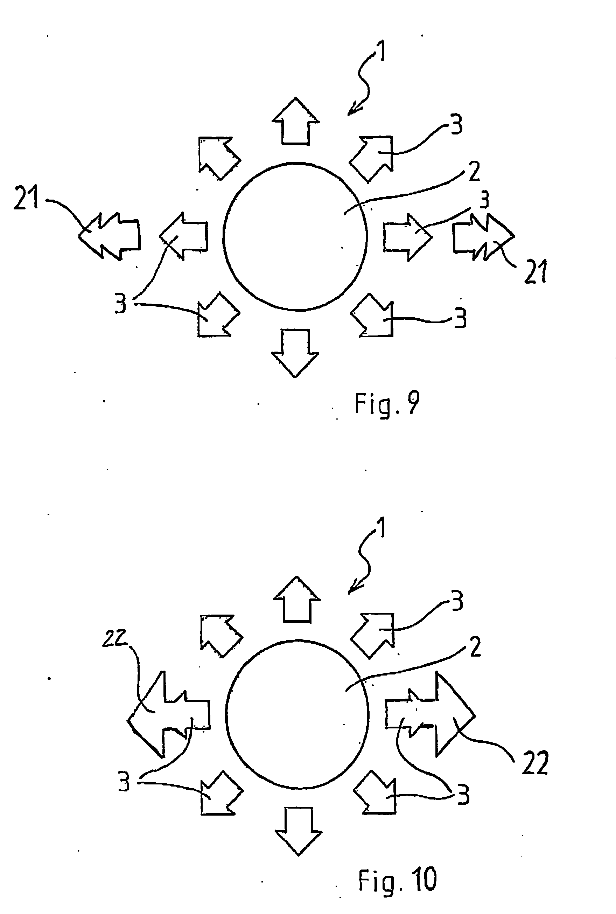

In den Fig. 9 und 10 sind verschiedene Möglichkeiten schematisch dargestellt, wie durch eine geeignete Verlagerung des Bedienknopfs 2 nach links oder rechts zusätzliche Fahrmanöver ausgewählt werden können. Während ein einfaches Verlagern des Bedienknopfs 2 nach links lediglich einen bereits beschriebenen Wechsel des Zielobjekts vorgibt, kann durch ein doppeltes Verlagern, bzw. Antippen des Bedienknopfs 2 nach links (Fig. 9) eine weitere Auswahlposition 21 und damit ein Fahrstreifenwechsel auf den linken Fahrstreifen eingeleitet werden. Es ist ebenfalls denkbar, anstelle einer doppelten Betätigung des Bedienknopfs 2 innerhalb eines vorgebbaren kurzen Zeitintervalls einen haptischen Widerstand etwa mittig in der maximal möglichen Verlagerung des Bedienknopfs 2 vorzusehen, der zwei Auswahlpositionen 3, 22 voneinander abgrenzt (Fig. 10). Wird der Bedienknopf 2 lediglich etwas nach links verlagert, so wird ein Wechsel des Zielobjekts eingeleitet, während nach einer Überwindung des haptischen Widerstands durch erhöhte Krafteinwirkung, also bei einer weitergehenden Verlagerung des Bedienknopfs 2 ein Fahrstreifenwechsel eingeleitet wird. Auf diese Weise kann in beiden Fällen eine intuitive Bedienung des Fahrerassistenzsystems 5 mit lediglich einem Bedienknopf 2 ermöglicht werden.

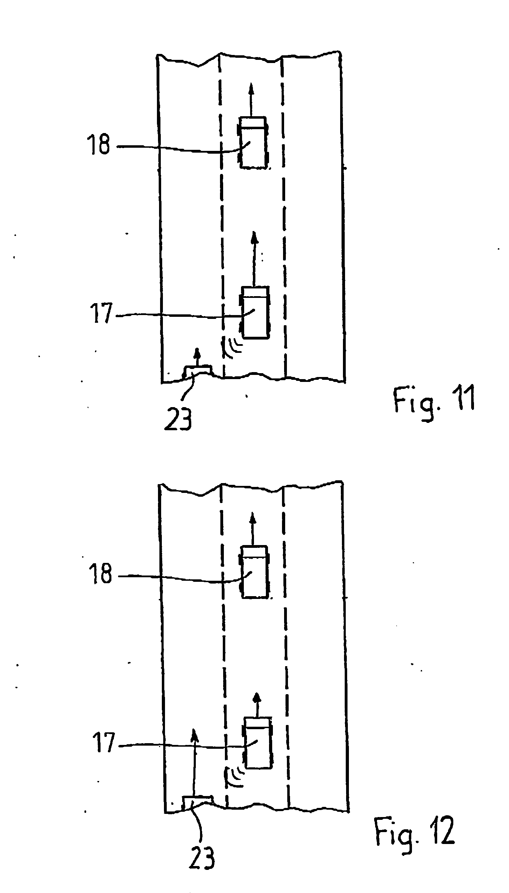

Die mit einem Fahrstreifenwechsel in Zusammenhang stehenden Fahrmanöver sind in den Fig. 11 und 12 dargestellt. Bei dem in Fig. 11 dargestellten Fahrstreifenwechsel auf einen links neben dem derzeit aktuellen Fahrstreifen wird mittels einer nach hinten gerichteten Umfeldsensorik festgestellt, dass die Geschwindigkeit eines auf dem linken Fahrstreifen fahrenden Fahrzeugs 23 geringer als die derzeitige Geschwindigkeit des eigenen Fahrzeugs 17 ist, so dass ein geringes bzw. vernachlässigbares Risiko für einen Wechsel auf den linken Fahrstreifen angenommen wird und das Fahrmanöver für einen Wechsel auf den linken Fahrstreifen angeboten wird und von dem Fahrer 4 eingeleitet werden kann.

Im Gegensatz dazu wird bei der in Fig. 12 schematisch dargestellten Situation festgestellt, dass die Geschwindigkeit eines sich auf dem linken Fahrstreifen nähernden Fahrzeugs 23 größer als die Geschwindigkeit des eigenen Fahrzeugs 17 ist, so dass im Falle eines Wechsels auf den linken Fahrstreifen eine Kollision beider Fahrzeuge 23 und 17 nicht ausreichend zuverlässig ausgeschlossen werden kann. Das Fahrmanöver eines Fahrstreifenwechsels nach links wird in diesem Fall nicht angeboten und kann von dem Fahrer 4 während des Betriebs des Fahrerassistenzsystems 5 nicht eingeleitet werden.

Auf diese Weise kann sichergestellt werden, dass Fahrmanöver, die mit einem übermäßigen Risiko verbunden wären, dem Fahrer 4 nicht angeboten und von dem Fahrer 4 auch nicht ohne weiteres eingeleitet, bzw. durchgeführt werden können. Zudem wird eine Warnfunktion bewirkt, da ein von dem Fahrerassistenzsystem 5 nicht angebotetes Fahrmanöver darauf schließen lässt, dass die Durchführung dieses Fahrmanövers mit einem erhöhten Risiko verbunden wäre. Der Fahrer 4 wird auf diese Weise indirekt über derartige Risiken informiert. Eine Abwägung und Entscheidung des Fahrers 4, ob er ein als riskant erachtetes Fahrmanöver mit Hilfe des Fahrerassistenzsystems 5 dennoch durchführen möchte und das Fahrmanöver gleichwohl einleiten will, kann und sollte zur Erhöhung der Fahrsicherheit grundsätzlich ausgeschlossen sein.

Durch die vielfältigen unterschiedlichen Fahrmanöver, die von dem Fahrerassistenzsystem 5 angeboten und automatisiert durchgeführt werden können, werden manuelle Eingriffe des Fahrers 4 und ein in diesen Fällen regelmäßig erforderlich werdendes Deaktivieren des Fahrerassistenzsystems 5 in vielfältigen Verkehrsbedingungen kaum noch erforderlich. Das Fahrerassistenzsystem 5 kann über lange Zeiträume einen seriell- sequentiellen Assistenzmodus beibehalten, bei dem Eingriffe des Fahrers 4 ausschließlich über die Schnittstelle 8 erfolgen und an das Fahrerassistenzsystem 5 weitergegeben werden, welches dann entsprechend der Vorgaben des Fahrers 4 das Fahrzeug 6 ansteuert.

Im Gegensatz dazu erzwingt der parallel-sequentielle Verfahrensablauf bei herkömmlichen Fahrerassistenzsystemen einen häufig erforderlich werdenden direkten (parallelen) Eingriff des Fahrers 4 auf das Fahrzeug 6 unter Umgehung des betreffenden Fahrerassistenzsystems, wodurch dieses Fahrerassistenzsystem häufig deaktiviert wird und erneut wieder aktiviert werden muss.

## Patentansprüche

1. Verfahren zur Steuerung eines Fahrerassistenzsystems (5), **dadurch gekennzeichnet, dass** mehrere an unterschiedliche Fahrsituationen jeweils gesondert angepasste Fahrmanöver zur Auswahl angeboten werden und das ein ausgewähltes Fahrmanöver aktiviert und solange durchgeführt wird, bis das ausgewählte Fahrmanöver abgeschlossen ist oder durch automatisiertes oder manuelles Eingreifen abgebrochen wird, und dass nach Abschluss der Durchführung des ausgewählten Fahrmanövers das Fahrerassistenzsystem in eine Grundfunktion zurückkehrt und diese Grundfunktion, bzw. das dadurch vorgegebene Fahrmanöver ausführt, solange das Fahrerassistenzsystem aktiviert ist.

2. Verfahren nach Anspruch 1, **dadurch gekennzeichnet, dass** die zur Auswahl angebotenen Fahrmanöver eine Abstandsregelung und/oder einen Abstandsregeltempomat und/oder eine Veränderung des Abstands zu einem vorgegebenen Zielobjekt und/oder einen Wechsel des Zielobjekts und/oder eine Kombination dieser Fahrmanöver beinhalten.

3. Verfahren nach Anspruch 1 oder Anspruch 2, **dadurch gekennzeichnet, dass** die zur Auswahl angebotenen Fahrmanöver einen Fahrstreifenwechsel beinhalten.

4. Verfahren nach einem der vorangehenden Ansprüche, **dadurch gekennzeichnet, dass** ein Fahrstreifenwechsel nur dann zur Auswahl angeboten wird, wenn bei einer Auswertung einer rückwärts gerichteten Umfeldsensorik ein ermitteltes Kollisionsrisiko mit anderen Verkehrsteilnehmern unterhalb eines vorgebbaren Risikogrenzwerts liegt.

5. Verfahren nach einem der vorangehenden Ansprüche, **dadurch gekennzeichnet, dass** in Abhängigkeit von dem Fahrmanöver ein Sollparameter ermittelt und bei der Aktivierung und der Durchführung (13) des Fahrmanövers berücksichtigt wird.

6. Verfahren nach einem der vorangehenden Ansprüche, **dadurch gekennzeichnet, dass** mindestens ein Parameter während der Durchführung (13) eines Fahrmanövers veränderbar ist.

7. Verfahren nach einem der vorangehenden Ansprüche, **dadurch gekennzeichnet, dass** die aktuell angebotenen Fahrmanöver optisch und/oder akustisch und/oder haptisch, bzw. taktil angezeigt werden.

8. Verfahren nach einem der vorangehenden Ansprüche, **dadurch gekennzeichnet, dass** während der Durchführung eines Fahrmanövers fahrmanöverspezifische Informationen optisch und/oder akustisch und/oder haptisch, bzw. taktil angezeigt werden.

9. Verfahren nach einem der vorangehenden Ansprüche, **dadurch gekennzeichnet, dass** vor einer Aktivierung eines Fahrmanövers eine Plausibilitätskontrolle (11) durchgeführt wird und nur diejenigen Fahrmanöver, welche die Plausibilitätskontrolle (11) bestehen, zur Auswahl angeboten werden.

10. Fahrerassistenzsystem (5) zur Durchführung eines Verfahrens zur Steuerung eines Fahrerassistenzsystems gemäß einem der Ansprüche 1 bis 9 mit einer ersten Sensoreinrichtung zur Erfassung von Fahrzustands- und Bewegungsgrößen eines Kraftfahrzeugs (6), mit einer zweiten Sensoreinrichtung zur Erfassung von vor dem Kraftfahrzeug (6) befindlichen bewegten Objekten und mit einer Steuereinrichtung (10) zur Steuerung von mit dem Fahrerassistenzsystem (5) steuerbaren Fahrzeugeigenschaften und Fahrmanöver, wobei das Fahrerassistenzsystem (5) ein Bedienelement (1) mit mindestens drei Auswahlpositionen (3) aufweist und wobei das Bedienelement (1) in zwei verschiedenen Richtungen jeweils zwei oder mehrere verschiedene Auswahlpositionen (3) aufweist.

11. Fahrerassistenzsystem nach Anspruch 10, **dadurch gekennzeichnet, dass** das Bedienelement (1) einen aus einer Ausgangsposition in vier, vorzugsweise in acht verschiedene Richtungen auslenkbaren Bedienknopf (2) aufweist.

12. Fahrerassistenzsystem nach einem der Ansprüche 10 oder 11, **dadurch gekennzeichnet, dass** das Bedienelement (1) einen Bedienknopf (2) aufweist, der in mindestens einer auslenkbaren Richtung einen überwindbaren haptischen Widerstand aufweist, der zwei verschiedene Auswahlpositionen voneinander abgrenzt.

13. Fahrerassistenzsystem nach einem der vorangehenden Ansprüche 10 bis 13, **dadurch gekennzeichnet, dass** das Fahrerassistenzsystem (5) eine Anzeigevorrichtung (9) aufweist.

14. Fahrerassistenzsystem nach Anspruch 14, **dadurch gekennzeichnet, dass** während einer Durchführung (13) eines Fahrmanövers mindestens ein Fahrmanöverparameter angezeigt wird.

## Claims

1. Method for controlling a driver assist system (5), **characterized in that** a plurality of driving manoeuvres respectively separately adapted to different driving situations are offered, and that a selected driving manoeuvre is activated and carried out until the selected driving manoeuvre is completed or is aborted by automated or manual intervention, and **in that** upon conclusion of the carrying out of the selected driving manoeuvre the driver assist system returns to a basic function and executes said basic function and/or the driving manoeuvre prescribed thereby as long as the driver assist system is activated.

2. Method according to Claim 1, **characterized in that** the driving manoeuvres offered for selection include distance control and/or adaptive cruise control and/or a change in the distance from a prescribed target object and/or a change in the target object and/or a combination of said driving manoeuvres.

3. Method according to Claim 1 or Claim 2, **characterized in that** the driving manoeuvres offered for selection include a lane change.

4. Method according to one of the preceding claims, **characterized in that** a lane change is offered for selection only when an identified risk of collision with other road users is below a prescribable risk limit value in an evaluation of a backward-directed environmental sensor system.

5. Method according to one of the preceding claims, **characterized in that** a desired parameter is determined as a function of the driving manoeuvre and is taken into account in the activation and the carrying out (13) of the driving manoeuvre.

6. Method according to one of the preceding claims, **characterized in that** at least one parameter is variable during the carrying out (13) of a driving manoeuvre.

7. Method according to one of the preceding claims, **characterized in that** the currently offered driving manoeuvres are displayed optically and/or acoustically and/or haptically or in a tactile fashion.

8. Method according to one of the preceding claims, **characterized in that** while a driving manoeuvre is being carried out driving manoeuvre-specific information is displayed optically and/or acoustically and/or haptically or in a tactile fashion.

9. Method according to one of the preceding claims, **characterized in that** before activation of a driving manoeuvre a plausibility check (11) is carried out and only those driving manoeuvres which pass the plausibility check (11) are offered for selection.

10. Driver assist system (5) for carrying out a method for controlling a driver assist system according to one of Claims 1 to 9, having a first sensor device for detecting variables of a motor vehicle (6) relating to driving state and movement, having a second sensor device for detecting moving objects located in front of the motor vehicle (6), and having a control device (10) for controlling vehicle characteristics and driving manoeuvres which can be controlled by the driver assist system (5), in which the driver assist system (5) has a control element (1) with at least three selecting positions (3), and in which the control element (1) respectively has two or more different selecting positions (3) in two different directions.

11. Driver assist system according to Claim 10, **characterized in that** the control element (1) has a control knob (2) which can be deflected from an initial position into four, preferably into eight, different directions.

12. Driver assist system according to either of Claims 10 and 11, **characterized in that** the control element (1) has a control knob (2) which in at least one deflectable direction has a surmountable haptic resistance which delimits two different selecting positions from one another.

13. Driver assist system according to one of the preceding Claims 10 to 12, **characterized in that** the driver assist system (5) has a display device (9).

14. Driver assist system according to Claim 13, **characterized in that** at least one driving manoeuvre parameter is displayed during carrying out (13) of a driving manoeuvre.

## Revendications

1. Procédé de commande d'un système d'assistance au conducteur (5), **caractérisé en ce que** plusieurs manoeuvres de conduite, respectivement adaptées séparément à des situations de conduite différentes, sont proposées à la sélection et **en ce qu'**une manoeuvre de conduite sélectionnée est activée et exécutée jusqu'à ce que la manoeuvre de conduite sélectionnée soit achevée ou soit interrompue par une intervention automatisée ou manuelle, et **en ce qu'**après l'achèvement de l'exécution de la manoeuvre de conduite sélectionnée, le système d'assistance au conducteur retourne dans une fonction de base et exécute cette fonction de base ou la manoeuvre de conduite prédéfinie par celle-ci tant que le système d'assistance au conducteur est activé.

2. Procédé selon la revendication 1, **caractérisé en ce que** les manoeuvres de conduite proposées à la sélection comprennent une régulation de la distance et/ou un régulateur de vitesse avec régulation de la distance et/ou une modification de la distance par rapport à un objet cible prédéfini et/ou un changement de l'objet cible et/ou une combinaison de ces manoeuvres de conduite.

3. Procédé selon la revendication 1 ou la revendication 2, **caractérisé en ce que** les manoeuvres de conduite proposées à la sélection comprennent un changement de voie de circulation.

4. Procédé selon l'une des revendications précédentes, **caractérisé en ce qu'**un changement de voie de circulation n'est proposé à la sélection que si, lors d'une interprétation d'un dispositif de détection d'environnement dirigé vers l'arrière, un risque de collision déterminé avec d'autres usagers de la route est inférieur à une valeur limite de risque pouvant être prédéfinie.

5. Procédé selon l'une des revendications précédentes, **caractérisé en ce qu'**un paramètre de consigne est déterminé en fonction de la manoeuvre de conduite et pris en compte lors de l'activation et de l'exécution (13) de la manoeuvre de conduite.

6. Procédé selon l'une des revendications précédentes, **caractérisé en ce qu'**au moins un paramètre peut être modifié pendant l'exécution (13) d'une manoeuvre de conduite.

7. Procédé selon l'une des revendications précédentes, **caractérisé en ce que** les manoeuvres de conduite actuellement proposées sont indiquées sous forme visuelle et/ou sonore et/ou sensorielle ou tactile.

8. Procédé selon l'une des revendications précédentes, **caractérisé en ce que** pendant l'exécution d'une manoeuvre de conduite, des informations spécifiques à la manoeuvre de conduite sont indiquées sous forme visuelle et/ou sonore et/ou sensorielle ou tactile.

9. Procédé selon l'une des revendications précédentes, **caractérisé en ce qu'**avant une activation d'une manoeuvre de conduite, un contrôle de plausibilité (11) est effectué et seules sont proposées à la sélection les manoeuvres de conduite qui réussissent le contrôle de plausibilité (11).

10. Système d'assistance au conducteur (5) destiné à mettre en oeuvre un procédé de commande d'un système d'assistance au conducteur selon l'une des revendications 1 à 9, comprenant un premier dispositif de détection destiné à détecter des grandeurs d'état de conduite et de déplacement d'un véhicule automobile (6), comprenant un deuxième dispositif de détection destiné à détecter des objets mobiles qui se trouvent devant le véhicule automobile (6) et comprenant un dispositif de commande (10) destiné à commander des propriétés du véhicule et des manoeuvres de conduite pouvant être commandées avec le système d'assistance au conducteur (5), le système d'assistance au conducteur (5) possédant un élément de commande (1) disposant d'au moins trois positions de sélection (3), et l'élément de commande (1) possédant respectivement deux positions de sélection différentes (3) ou plus dans deux directions différentes.

11. Système d'assistance au conducteur selon la revendication 10, **caractérisé en ce que** l'élément de commande (1) possède un bouton de commande (2) qui peut être déplacé dans quatre, de préférence dans huit directions différentes depuis une position initiale.

12. Système d'assistance au conducteur selon l'une des revendications 10 ou 11, **caractérisé en ce que** l'élément de commande (1) possède un bouton de commande (2) qui possède dans au moins une direction dans laquelle il peut être déplacé une résistance sensorielle pouvant être surmontée, laquelle délimite l'une par rapport à l'autre deux positions de sélection différentes.

13. Système d'assistance au conducteur selon l'une des revendications 10 à 12, **caractérisé en ce que** le système d'assistance au conducteur (5) possède un dispositif d'affichage (9).

14. Système d'assistance au conducteur selon la revendication 13, **caractérisé en ce qu'**au moins un paramètre de manoeuvre de conduite est affiché pendant une exécution (13) d'une manoeuvre de conduite.
